# EUROPÄISCHE PATENTSCHRIFT

(11) **EP 1 071 990 B1**
(45) Veröffentlichungstag und Bekanntmachung des Hinweises auf die Patenterteilung: **22.05.2002**
(21) Anmeldenummer: 99934350.2
(22) Anmeldetag: 18.01.1999
(51) Int. Cl.: G06F 9/38

(54) **VORRICHTUNG ZUR HIERARCHISCHEN UND VERTEILTEN STEUERUNG VON PROGRAMMIERBAREN MODULEN IN HOCHINTEGRIERTEN SYSTEMEN**
DEVICE FOR THE HIERARCHICAL AND DISTRIBUTED CONTROL OF PROGRAMMABLE MODULES IN HIGHLY INTEGRATED SYSTEMS
DISPOSITIF POUR LA COMMANDE HIERARCHIQUE ET REPARTIE DE MODULES PROGRAMMABLES DANS DES SYSTEMES A HAUT DEGRE D'INTEGRATION

(30) Priorität: 19.02.1998 DE 19807005
(43) Veröffentlichungstag der Anmeldung: 31.01.2001
(73) Patentinhaber: Infineon Technologies AG, 81669 München (DE)
(72) Erfinder: HACHMANN, Ulrich, D-81677 München (DE); RAAB, Wolfgang, D-81739 München (DE); RAMACHER, Ulrich, D-81545 München (DE)
(74) Vertreter: Dokter, Eric-Michael
(86) Internationale Anmeldenummer: DE9900101
(87) Internationale Veröffentlichungsnummer: WO9942923

(56) Entgegenhaltungen:
- EP-A- 0 328 721
- EP-A- 0 544 083
- LINO DE CAMPOS G: "ASYNCHRONOUS POLYCYCLIC ARCHITECTURE" JOINT INTERNATIONAL CONFERENCE ON VECTOR AND PARALLEL PROCESSING, 1 January 1992 (1992-01-01), pages 387-398, XP000471727
- WOLFE A ET AL: "A VARIABLE INSTRUCTION STREAM EXTENSION TO THE VLIW ARCHITECTURE" COMPUTER ARCHITECTURE NEWS, vol. 19, no. 2, 1 April 1991 (1991-04-01), pages 2-14, XP000203245 ISSN: 0163-5964
- RAJIV JAIN: "An alternative approach towards the design of control units" MICROELECTRONICS AND RELIABILITY , vol. 24, no. 6, - 1984 pages 1009-1012, XP002110102

## Beschreibung

Die Erfindung betrifft hochintegrierte Schaltungen, die eine Reihe von Einzelmodulen unterschiedlichster Funktionalität und Komplexität beinhalten und die je nach Einsatz des Systems flexibel konfigurier- oder programmierbar sind. Diese Einzelmodule sind einerseits bei möglichst geringer Befehlsbandbreite mit Programmen zu versorgen und andererseits zu koordinieren bzw. zu synchronisieren. Ein synchrones Verhalten der Einzelmodule kann beispielsweise auf sehr einfache Weise dadurch erreicht werden, daß in sehr breiten Befehlswörtern VLIW (very long instruction word) einzelne Bits den jeweiligen Einzelmodulen fest zugeordnet sind.

Dient ein solches hochintegriertes System beispielsweise zur Bearbeitung eines zweidimensionalen Bildes, dessen Bildpunkte (Pixel) aus einem Bildspeicher abschnittsweise ausgelesen, in einem Rechenwerk pixelweise bearbeitet und schließlich wieder in den Bildspeicher zurückgeschrieben werden, so sind neben dem Rechenwerk Adreßgeneratoren für das Lesen und Beschreiben des Bildspeichers von nöten. Während die Adreßgeneratoren die Zweidimensionalität des zu bearbeitenden Objekts bei der Adreßberechnung berücksichtigen müssen, zum Beispiel durch zwei ineinandergeschachtelte Programmschleifen, muß das Rechenwerk nur die Gesamtzahl der zu verarbeitenden Pixel kennen, nicht aber deren Anordnung im Speicher. Eine einzige Programmschleife reicht deshalb für das Rechenwerk aus. Werden jedoch die Befehle für die Adreßgeneratoren und für das Rechenwerk zu einem entsprechend langen Befehlswort VLIW zusammengefaßt, so hat das resultierende Programm unnötigerweise auch für den Anteil des Rechenwerks zwei ineinandergeschachtelte Schleifen.

Beim Einsatz solcher Systeme tritt außerdem häufig die Situation auf, daß nicht alle Module gleichzeitig aktiv sind, wodurch Übertragungsbandbreite zum, in der Regel außerhalb der integrierten Schaltung befindlichen, Befehlsspeicher vergeudet wird, da für die gerade nicht benötigten Module relativ viele sogenannte NOP-Befehle (no operation) mit übertragen werden. Eine Möglichkeit um Bandbreite zum Befehlsspeicher zu sparen besteht darin, daß die Befehlsworte in komprimierter Form, das heißt weitgehend entfernten NOP-Befehlen, im Befehlsspeicher abgelegt werden und erst auf dem Weg zu den einzelnen Modulen die fehlenden NOP-Befehle wieder ergänzt werden.

Aus der europäischen Patentanmeldung EP 0 768 602 A2 ist eine Vorrichtung zur hierarchischen und verteilten Steuerung von programmierbaren Modulen bekannt, bei der eine Vielzahl von Steuermodulen vorhanden sind, die mit einer übergeordneten Steuereinheit Steuerinformationen austauschen und die über Steuerleitungen den jeweiligen Steuermodulen fest zugeordnete Verarbeitungsmodule ansteuern.

In der Druckschrift Gunther, Bernhard K.: Multithreading with Distributed Functional Units. IEEE Transactions on Computers, Vol. 46, No. 4, April 1997, Seiten 399 bis 411, ist eine Synchronisiereinheit für eine Vorrichtung mit einer Vielzahl von Steuer- und Verarbeitungsmodulen offenbart.

Die der Erfindung zugrundeliegende Aufgabe besteht nun darin, eine Vorrichtung zur hierarchischen und verteilten Steuerung von programmierbaren Modulen in hochintegrierten Systemen anzugeben, bei der eine möglichst geringe Übertragungsbandbreite des Befehlsstromes zwischen einem externen Befehlsspeicher und dem hochintegrierten System und eine möglichst geringe Verlustleistung des hochintegrierten Systems erzielt wird.

Diese Aufgabe wird erfindungsgemäß durch die Merkmale des Anspruchs 1 gelöst. Bevorzugte Ausgestaltungen der Erfindung ergeben sich aus den weiteren Ansprüchen.

Die Erfindung weist insbesondere den Vorteil auf, daß die einzelnen Module modular programmierbar sind, was insbesondere bei hochintegrierten Systemen mit vielen Einzelmodulen hinsichtlich der Entwicklung und Fehlersicherheit von wesentlicher Bedeutung ist.

Ausführungsbeispiele der Erfindung werden nachfolgend anhand der Zeichnungen erläutert. Dabei zeigt
- Figur 1: einen hochintegrierten Vision Instruction Processor mit programmierbaren Modulen,
- Figur 2: ein Blockschaltbild zur Erläuterung einer Hierarchie von Steuereinheiten,
- Figur 3: ein Blockschaltbild zur Verdeutlichung der getrennten Befehlsverarbeitung in den einzelnen Steuereinheiten und deren Synchronisierung und
- Figur 4: ein Blockschaltbild weiterer Ausgestaltungen der getrennten Befehlsverarbeitung in den einzelnen Steuereinheiten und deren Synchronisierung .

Die Erfindung besteht im wesentlichen darin, daß statt eines gemeinsamen Befehlsstroms mit relativ breiten Befehlswörtern VLIW für die programmierbaren Module eines Systems jeweils ein individueller Befehlsstrom mit relativ schmalen Befehlswörtern verwendet wird und die Synchronisierung der Module über eine spezielle Synchronisiereinrichtung, die beispielsweise auf der Basis von Handshake-Leitungen und Semaphoren aufgebaut sein kann, erfolgt. Den einzelnen Verarbeitungsmodulen werden Steuersignale aus einer Hierarchie von Steuermodulen (controller) zugeführt, wobei die Einzelcontroller von einem Mikrocontroller oder RISC-Prozessor versorgt bzw. gesteuert und über die Synchronisiereinrichtung synchronisiert werden. Durch die getrennten Befehlsströme kann die Anzahl der NOP-Befehle reduziert werden, was durch ein im Anhang befindliches Beispiel verdeutlicht wird. Darüber hinaus enthalten die einzelnen Steuereinheiten eigene Befehlsspeicher (instruction caches) und es brauchen immer nur die Befehle in den Befehls-Cache-Speichern der Steuermodule ausgetauscht werden, deren Steuerprogramm geändert werden soll, wodurch die Übertragungsbandbreite weiter reduziert werden kann. Da durch die getrennten Befehlsströme eine stärkere Entkopplung der Module möglich ist als bei den Ansätzen mit einem gemeinsamen sehr breiten Befehlswort und nicht immer alle Module erforderlich sind, werden die gerade nicht benötigten Module abgeschaltet oder in einen Stand-by- Mode geschaltet, wodurch der Leistungsverbrauch des hochintegrierten Systems wesentlich reduziert wird.

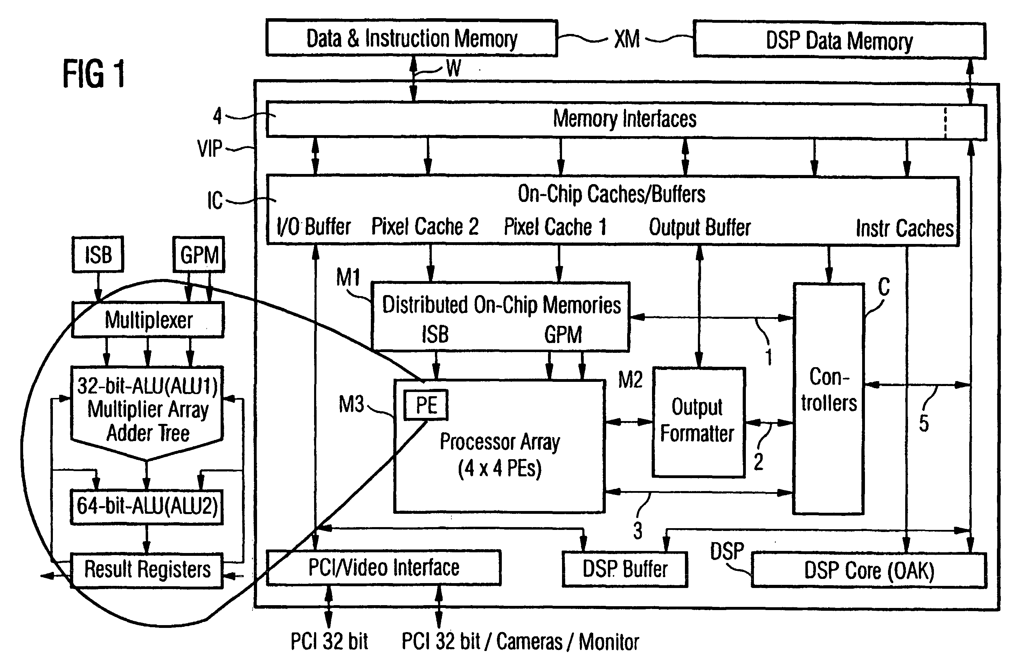

In Figur 1 ist beispielhaft ein Vision Instruction Prozessor VIP dargestellt, der eine Schnittstelle zu externen Speichern XM aufweist. Aus dem externen Speicher XM werden unter anderem Befehlswörter W über Speicherinterfaces in mehrere Befehls-Cache-Speicher IC eingelesen, wobei jeweils ein solcher Cache-Speicher jeweils einer von mehreren Steuermodulen C zugeordnet ist. Einzelne Verarbeitungsmodule M1 ... M3 wie beispielsweise verteilte auf dem Chip befindliche Speicher oder ein Prozessorfeld, tauschen mit den jeweils zugehörigen Steuermodulen über getrennte Leitungen 1 ... 3 Daten aus. Die gezielte Aktivierung der Steuermodule C1...C6 und damit auch der Verarbeitungsmodule M1 ... M3 übernimmt eine übergeordnete, in der Regel frei programmierbare Steuerungseinheit DSP, zum Beispiel ein RISC- oder DSP-Kern. Eine Aktivierung/Deaktivierung kann bis zum vollständigen An-/Abschalten des gesamten jeweiligen Moduls gehen oder aber nur Teile des jeweiligen Moduls betreffen.

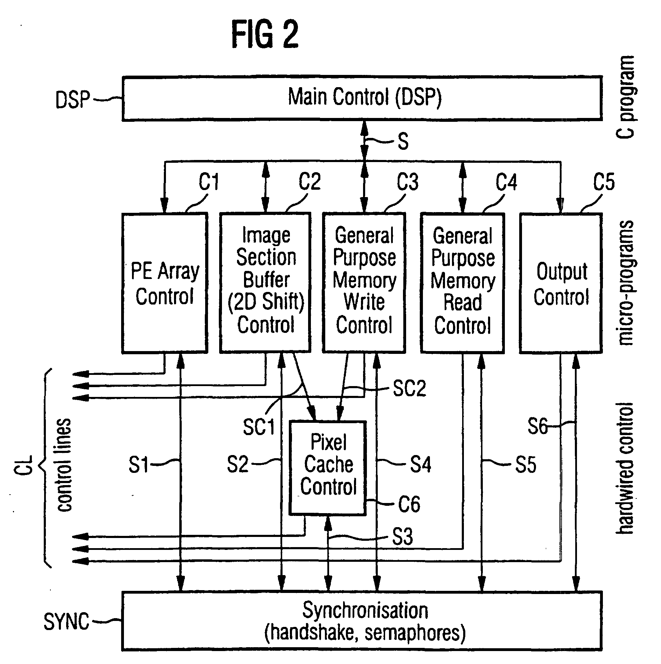

In Figur 2 ist eine Hierarchie der Steuerungsmodule gezeigt, wobei die übergeordnete Steuerungseinheit DSP, deren Steuerprogramm beispielsweise in einer Hochsprache programmiert ist, untergeordnete Steuerungsmodule C1 ... C5 mit Steuerdaten S versorgt. Diese untergeordneten Steuerungsmodule sind dabei bestimmten Verarbeitungsmodulen, wie zum Beispiel dem Prozessorfeld, Speicher oder Ausgabeeinheit zugeordnet und können über in ihnen gebildete Steuerinformationen entweder über Steuerleitungen CL, die Teil der Datenverbindungen 1...3 in Fig. 1 sind, Verarbeitungsmodule oder aber den Steuerungsmodulen untergeordnete Steuermodule C6 ansteuern, wobei mehrere in der Hierarchie darüberliegende Steuermodule Steuerinformationen SC1, SC2 an ein untergeordnetes Steuermodul C6 liefern können. Die direkt von der übergeordneten Steuerungseinheit DSP angesteuerten Steuerungsmodule werden in der Regel in Form eines Mikroprogramms realisiert, wohingegen die untergeordneten Steuermodule, z. B. C6, meist in reiner Hardware ausgeführt sind. Sowohl die direkt von der übergeordneten Steuereinheit angesteuerten Steuermodule C1...C5 als auch die untergeordneten Steuermodule werden über eine gemeinsame Synchronisiereinheit SYNC zeitlich synchronisiert. Die Synchronisiereinheit SYNC besteht im wesentlichen aus Hardware und ist über bidirektionale Steuerleitungen S1 ... S6 mit den Steuermodulen verbunden. Falls erforderlich wird so eine taktgenaue Synchronisierung zum Beispiel über Handshake-Leitungen erreicht. Eine lockere Synchronisierung kann, eventuell mit Hardwareunterstützung, durch Semaphore, Ereigniszähler oder ähnliches implementiert werden.

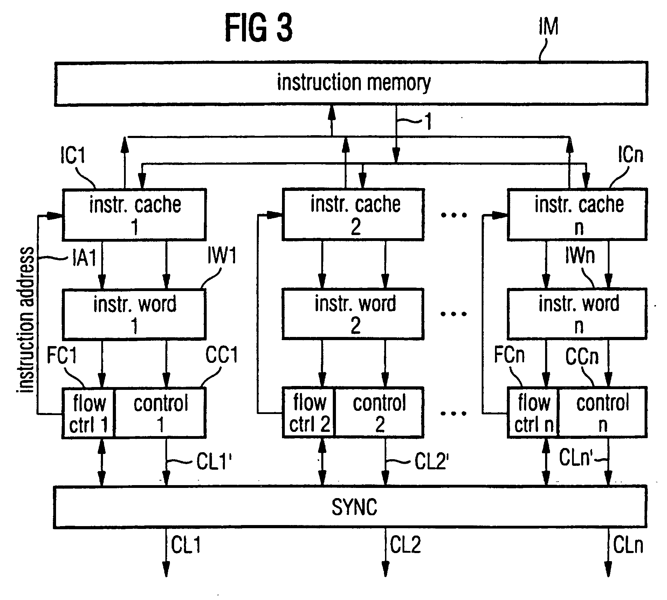

Aus Figur 3 wird deutlich, daß mehrere Befehls-Cache-Speicher IC1 ... ICn nacheinander einen Befehlsspeicher IM adressieren und für jeden Befehlsspeicher ein Befehlswort I mit relativ geringer Wortbreite nacheinander in die einzelnen Befehls-Cash-Speicher eingelesen wird. In jedem Steuermodul wird dabei aus dem jeweiligen Befehlswort, zum Beispiel im Steuermodul C1 das Befehlswort IB1, in einen Steueranteil CC1 für eine Steuerleitung CL1' und einen Ablaufsteuerungsanteil FC1 zur Beeinflussung der Befehlsadresse im Befehls-Cache-Speicher umgesetzt. Die Synchronisiereinheit SYNC sorgt dafür, daß die an den Ausgängen der einzelnen Steuermodule gebildeten Steuerinformationen CL1' ... CLn' synchronisiert auf die Steuerleitungen CL1 ... CLn aufgeschaltet werden.

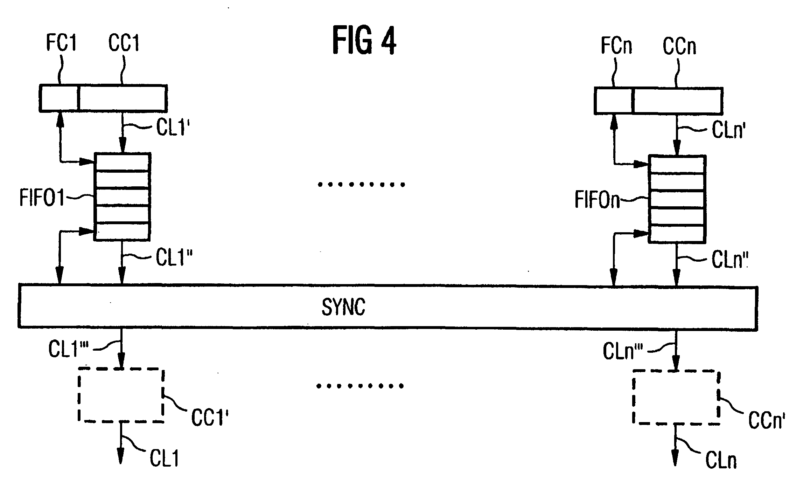

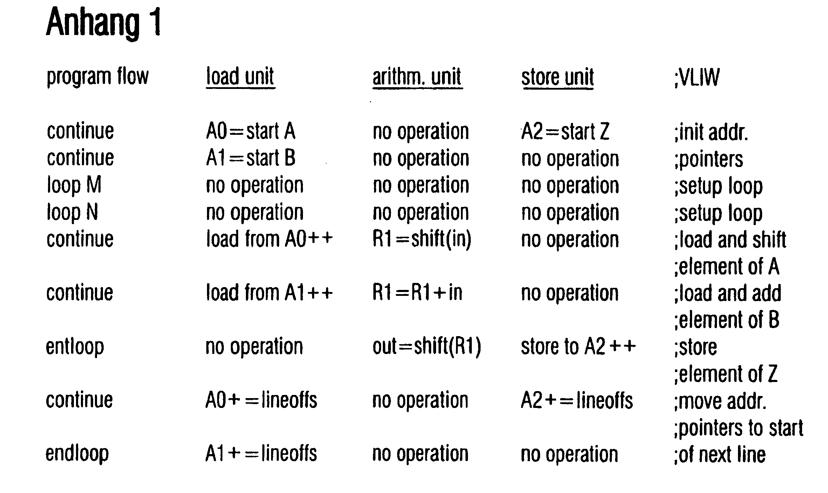

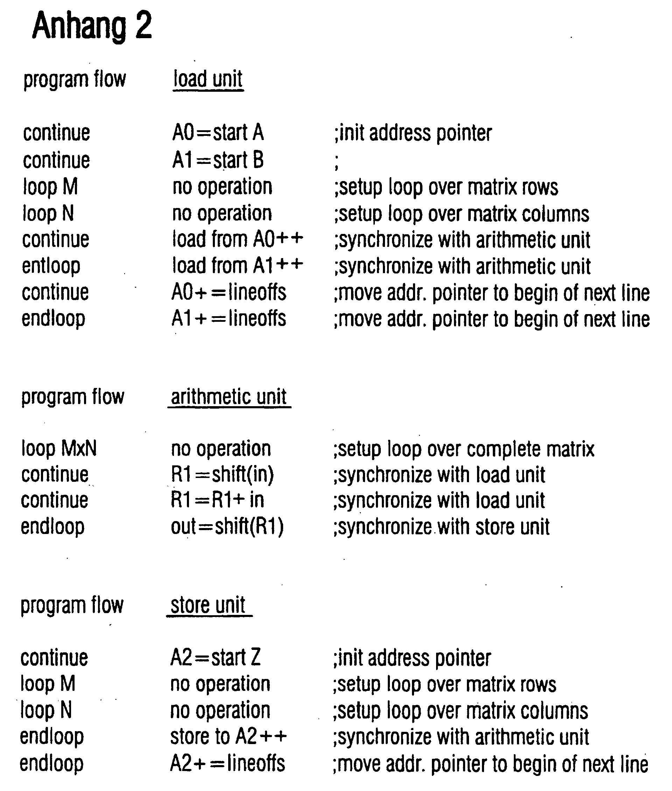

Zur besseren Entkopplung sind in einem weiteren Ausführungsbeispiel, wie in Figur 4 dargestellt, zusätzlich zwischen den Steuermodulen und der Synchronisiereinheit SYNC FIFO-Speicher FIFO1 ... FIFOn vorgesehen, wobei die FIFO-Speicher durch die jeweiligen Ablaufsteuerungsteile FC1... FCn und durch die Synchronisiereinheit gesteuert werden. Die Synchronisiereinheit SYNC sorgt dafür, daß die an den Ausgängen der einzelnen FIFO-Speicher anstehenden Steuersignale CL1'' ... CLn'' synchronisiert auf die Steuerleitungen CL1 ... CLn aufgeschaltet werden.

Ein zweites weiteres Ausführungsbeispiel besteht darin, daß, wie in Figur 4 gestrichelt angedeutet, die Synchronisiereinheit SYNC nicht direkt Steuersignale auf die Steuerleitungen aufschaltet, sondern daß Steuersignale CL1'''...CLn''' weitere Steuermodule CC1'... CCn' ansteuern und diese erst Steuersignale für die Steuerleitungen CL1.. CLn liefern.

## Patentansprüche

1. Vorrichtung zur hierarchischen und verteilten Steuerung von programmierbaren Modulen (M1 ... M3) in hochintegrierten Systemen (VIP),
bei der eine Vielzahl von Steuermodulen (C1 ... C6) vorhanden sind, die mit einer übergeordneten Steuereinheit (DSP) Steuerinformationen (S) austauschen und die über Steuerleitungen (CL) den jeweiligen Steuermodulen fest zugeordnete Verarbeitungsmodule (M1 ... M3) ansteuern,
bei der eine Synchronisiereinheit (SYNC) vorhanden ist, die über Synchronisierleitungen (S1 ... S6) mit allen Steuermodulen (C1 ... C6) verbunden ist,
bei der jedem Steuermodul ein eigener Befehls-Cache-Speicher (IC1 ... ICn) zugeordnet ist,
bei der Steuermodule durch die übergeordnete Steuereinheit (DSP) an-und abschaltbar sind und/oder
bei der die Verarbeitungsmodule durch entsprechende Steuersignale auf den Steuerleitungen (CL1 ... CLn) an- und abschaltbar sind.

2. Vorrichtung nach Anspruch 1,
bei der Steuermodule über FIFO-Speicher (FIFO1...FIFOn) und die Synchronisiereinheit (SYNC) mit Steuerleitungen (CL1..CLn) verbunden sind.

3. Vorrichtung nach Anspruch 1 oder 2,
bei der Steuermodule über FIFO-Speicher (FIFO1...FIFOn) und die Synchronisiereinheit (SYNC) mit weiteren Steuermodulen (CC1..CCn) verbunden sind und
bei der Ausgänge der weiteren Steuermodule mit den Steuerleitungen (CL1..CLn) verbunden sind.

4. Vorrichtung nach einem der vorhergehenden Ansprüche,
bei der untergeordnete Steuermodule (C6) vorhanden sind, die Steuerinformationen (SC1, SC2) erhalten und Informationen mit der Synchronisationseinheit (SYNC) austauschen und die Steuerinformationen über Steuerleitungen den untergeordneten Steuermodulen zugeordneten Verarbeitungsmodulen zuführen.

5. Vorrichtung nach einem der vorhergehenden Ansprüche,
bei der die Steuermodule im wesentlichen durch Mikroprogramme und die Synchronisiereinheit sowie gegebenenfalls die untergeordneten Steuermodule im wesentlichen fest verdrahtet sind.

## Claims

1. Apparatus for the hierarchical and distributed control of programmable modules (M1 ... M3) in large-scale integrated systems (VIP),
which contains a multiplicity of control modules (C1...C6) which interchange control information (S) with a superordinate control unit (DSP) and which use control lines (CL) to actuate processing modules (M1 ... M3) permanently associated with the respective control modules,
which contains a synchronization unit (SYNC) which is connected to all the control modules (C1 ... C6) via synchronization lines (S1... S6),
in which each control module has a dedicated instruction cache (IC1 ... ICn) associated with it,
in which control modules can be turned on and off by the superordinate control unit (DSP), and/or
in which the processing modules can be turned on and off by appropriate control signals on the control lines (CL1 ... CLn).

2. Apparatus according to Claim 1,
in which control modules are connected to control lines (CL1...CLn) via FIFO memories (FIFO1...FIFOn) and the synchronization unit (SYNC).

3. Apparatus according to Claim 1 or 2,
in which control modules are connected to further control modules (CC1..CCn) via FIFO memories (FIFO1...FIFOn) and the synchronization unit (SYNC), and
in which outputs of the further control modules are connected to the control lines (CL1..CLn).

4. Apparatus according to one of the preceding claims,
which contains subordinate control modules (C6) which receive control information (SC1, SC2) and interchange information with the synchronization unit (SYNC) and supply the control information via control lines to processing modules associated with the subordinate control modules.

5. Apparatus according to one of the preceding claims,
in which the control modules are essentially [lacuna] by microprograms, and the synchronization unit and possibly the subordinate control modules are essentially hard wired.

## Revendications

1. Dispositif pour la commande hiérarchique et répartie de modules programmables (M1 ... M3) dans des systèmes à haut degré d'intégration (VIP),
dans lequel est prévue une pluralité de modules de commande (C1 ... C6), qui échangent des informations de commande (S) avec une unité de commande (DSP) hiérarchiquement supérieure et qui, par l'intermédiaire de lignes de commande (CL), activent des modules de traitement (M1 .... M3) affectés de manière stationnaire aux modules de commande respectifs,
dans lequel est prévue une unité de synchronisation (SYNC), qui est reliée par l'intermédiaire de lignes de synchronisation (S1 ... S6) à tous les modules de commande (C1 ... C6),
dans lequel une mémoire cache d'instruction (IC1 ... ICn) est affectée à chaque module de commande,
dans lequel des modules de commande peuvent être activés et désactivés par l'unité de commande (DSP) hiérarchiquement supérieure et/ou
dans lequel les modules de traitement peuvent être activés et désactivés par des signaux de commande correspondants transmis dans les lignes de commande (CL1 ... CLn).

2. Dispositif selon la revendication 1,
dans lequel des modules de commande, par l'intermédiaire de mémoires FIFO (FIFO1 ... FIFOn), et l'unité de synchronisation (SYNC) sont reliés aux lignes de commande (CL1 ... CLn).

3. Dispositif selon la revendication 1 ou 2,
dans lequel des modules de commande, par l'intermédiaire de mémoires FIFO (FIFO1 ... FIFOn), et l'unité de synchronisation (SYNC) sont reliés à d'autres modules de commande (CC1 ... CCn) et
dans lequel des sorties des autres modules de commande sont reliées aux lignes de commande (CL1 ... CLn).

4. Dispositif selon l'une des revendications précédentes, dans lequel sont prévus des modules de commande (C6) hiérarchiquement inférieurs, qui reçoivent des informations de commande (SC1, SC2) et échangent des informations avec l'unité de synchronisation (SYNC) et acheminent les informations de commande par l'intermédiaire de lignes de commande vers des modules de traitement affectés aux modules de commande hiérarchiquement inférieurs.

5. Dispositif selon l'une des revendications précédentes, dans lequel les modules de commande sont câblés sensiblement par des microprogrammes et l'unité de synchronisation, ainsi que, le cas échéant, les modules de commande hiérarchiquement inférieurs sont câblés sensiblement de manière fixe.
